# EUROPEAN PATENT SPECIFICATION

(11) **EP 3 624 486 B1**
(45) Date of publication and mention of the grant of the patent: **07.07.2021**
(21) Application number: 17926233.2
(22) Date of filing: 25.09.2017
(51) Int. Cl.: H04W 24/08, H04W 76/27, H04W 72/04, H04W 76/14

(54) **RESOURCE CONFIGURATION METHOD, TERMINAL DEVICE AND NETWORK DEVICE**
RESSOURCENKONFIGURATIONSVERFAHREN, ENDGERÄT UND NETZWERKVORRICHTUNG
PROCÉDÉ DE CONFIGURATION DE RESSOURCE, DISPOSITIF TERMINAL ET DISPOSITIF RÉSEAU

(43) Date of publication of application: 18.03.2020
(73) Proprietor: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan Guangdong 523860 (CN); YANG, Ning, Dongguan Guangdong 523860 (CN)
(74) Representative: Manitz Finsterwald Patent- und Rechtsanwaltspartnerschaft mbB
(86) International application number: PCT/CN2017/103215
(87) International publication number: WO 2019/056383

(56) References cited:
- EP-A1- 3 179 792
- EP-A1- 3 179 794
- WO-A1-2016/105570
- WO-A1-2017/052451
- CN-A- 106 105 355
- CN-A- 106 233 767
- US-A1- 2016 212 793
- "3rd Generation Partnership Project; Technical Specification Group Radio Access Network; Evolved Universal Terrestrial Radio Access (E-UTRA); Radio Resource Control (RRC); Protocol specification (Release 14)", 3GPP DRAFT; DRAFT_36331-E40_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 24 September 2017 (2017-09-24), XP051354059, Retrieved from the Internet: URL:http://www.3gpp.org/ftp/tsg_ran/WG2_RL 2/Specifications/201709_draft_specs_after_ RAN_77/ [retrieved on 2017-09-24]
- ZTE: "Transmission resource configuration for D2D discovery", 3GPP TSG-RAN WG2 Meeting #86, R2-142152, 23 May 2014 (2014-05-23), XP050790104,

## Description

### TECHNICAL FIELD

Embodiments of the present disclosure generally relate to communication technologies, and more particularly, to resource configuration methods, terminal devices and network devices.

### BACKGROUND

The device-to-device communication (D2D) technology is based on the sidelink. The D2D technology does not use the uplink and downlink transmission resources of base stations, and thus has unique advantages and has been introduced in the Rel-12 version of the Long Term Evolution (LTE). With the advancement of research and standardization of New Radio (NR) in the 5th generation (5G) system, it is an inevitable trend to introduce into the 5G systems the D2D communication technology which uses the sidelink.

A scheduling mode and a resource pool mode are introduced in the existing LTE D2D, which are simply referred to as mode 1 and mode 2, respectively. Mode 1 can only be used in the connected state, and is scheduled by a base station. This mode requires to use the Uu interface between the terminal device and the base station, and the terminal device needs to be maintained in the connected state, and accordingly the energy consumption is large. Mode 2 can be used in the connected state. Mode 2 can also be used in the idle mode, but only the shared resource pool can be used. When the shared resource pool is used, there may be conflicts. Thus, in the LTE D2D-based Vehicle To X (V2X) systems, sensing is introduced to the shared resource pool mode, but the introduced sensing may increase latency.

EP3179792A1 discloses a Device-to-Device (D2D) resource pool configuration method, device and system. A D2D User Equipment (UE) receives D2D resource pool configuration information of an Evolved Node B (eNB); and the D2D UE acquires a D2D sending resource from the D2D resource pool configuration information, and performs D2D sending.

US2016/212793A1 discloses a method and apparatus for using resources for a device-to-device (D2D) operation in a wireless communication system. A user equipment (UE) receives D2D resources used for transmission of D2D signals in radio resource control (RRC) idle mode, and transmits the D2D signals by using the D2D resources in the RRC idle mode. The D2D resources may be used in the RRC idle mode only, or may be used after entering the RRC connected mode. Alternatively, the UE receives D2D resources used for transmission of D2D signals in RRC connected mode, and transmits the D2D signals by using the D2D resources in the RRC idle mode.

3GPP document XP051354059 discusses RRC procedures, including UE state transitions.

WO2016/105570A1 discloses Systems, methods, and instrumentalities for a wireless transmit/receive unit (WTRU) autonomously synchronizing. For example, a WTRU may be configured to receive a downlink timing synchronization. The WTRU may be configured to determine a synchronization signal. The WTRU may be configured to determine a synchronization mode. The synchronization mode may be RRC CONNECTED mode. The synchronization mode may be RRC IDLE mode. The WTRU may communicate data to the network while in an unsynchronized state in an RRC IDLE and/or an RRC CONNECTED mode.

### SUMMARY

The invention is defined by the independent claims. Embodiments of the present disclosure provide resource configuration methods, terminal devices and network devices, to reduce energy consumption of the terminal devices and improve performance of communication system.

According to a first aspect, there is provided a resource configuration method, including:
if a first terminal device is in a connected state, receiving resource configuration information sent by a network device, wherein the resource configuration information is used to indicate a dedicated transmission resource; and
if the first terminal device is in an inactive state, performing sidelink data transmission with a second terminal device using the dedicated transmission resource which is configured when the first terminal device is in the connected state.

In the resource configuration method according to embodiments of the present disclosure, the terminal device receives the dedicated transmission resource allocated by the network device if the terminal device is in the connected state, and uses the dedicated transmission resource to perform data transmission with other terminal devices if the terminal device in the inactive state or the idle state. In this way, the terminal device can use the dedicated transmission resource configured by the network device even if the terminal device is in the inactive state or the idle state. The resource configuration method according to embodiments of the present disclosure can reduce energy consumption of the terminal device and enable the terminal device to enjoy the benefits of the dedicated resource.

In connection with the first aspect, in a possible implementation of the first aspect, receiving resource configuration information sent by a network device includes:
receiving, by the first terminal device, a Radio Resource Control (RRC) message sent by the network device, wherein the RRC message includes the resource configuration information.

In connection with the first aspect and the above implementations, in another possible implementation of the first aspect, the RRC message is used to indicate that the first terminal device transits from the connected state to the inactive state or the idle state.

In connection with the first aspect and the above implementations, in another possible implementation of the first aspect, the method further includes:
if the first terminal device is in the connected state, receiving from the network device receiving resource information, wherein the receiving resource information is used to indicate a receiving resource set; and
if the first terminal device is in the inactive state or the idle state, receiving data sent from a third terminal device using a resource in the receiving resource set.

In connection with the first aspect and the above implementations, in another possible implementation of the first aspect, receiving from the network device receiving resource information, includes:
receiving, by the first terminal device, RRC signaling or a System Information Block (SIB) sent by the network device, wherein the RRC signaling and the SIB include the receiving resource information.

In connection with the first aspect and the above implementations, in another possible implementation of the first aspect, receiving, by the first terminal device, RRC signaling or a SIB sent by the network device includes:
receiving, by the first terminal device, the SIB periodically broadcast by the network device.

In connection with the first aspect and the above implementations, in another possible implementation of the first aspect, the dedicated transmission resource belongs to the receiving resource set.

In connection with the first aspect and the above implementations, in another possible implementation of the first aspect, the dedicated transmission resource is used only for the first terminal device to send data.

In connection with the first aspect and the above implementations, in another possible implementation of the first aspect, the dedicated transmission resource is used for a terminal device group to transmit data, the terminal device group includes at least two terminal devices, and the at least two terminal devices includes the first terminal device.

In connection with the first aspect and the above implementations, in another possible implementation of the first aspect, there is no concurrent data transmission by a plurality of terminal devices in the terminal device group, and only one of the terminal devices in the terminal device group is allowed to send data at a time using the dedicated transmission resource.

In connection with the first aspect and the above implementations, in another possible implementation of the first aspect, a plurality of terminal devices in the terminal device group send data concurrently, and the plurality of terminal devices use different dedicated transmission resources to concurrently send data.

In connection with the first aspect and the above implementations, in another possible implementation of the first aspect, the resource configuration information includes an identifier of the first terminal device.

In connection with the first aspect and the above implementations, in another possible implementation of the first aspect, the identifier of the first terminal device is used to indicate a source address by which the first terminal device sends data to the second terminal device.

It should be understood that the identifier of the first terminal device can uniquely identify the first terminal device.

According to exemplary embodiments, the identifier of the first terminal device may be processed using certain Hash algorithm or truncate algorithm to generate a short identifier which may be used to identify the first terminal device.

In the resource configuration method according to embodiments of the present disclosure, the terminal device receives the dedicated transmission resource allocated by the network device if the terminal device is in the connected state, and uses the dedicated transmission resource to perform data transmission with other terminal devices if the terminal device in the inactive state or the idle state. In this way, the terminal device can use the dedicated transmission resource configured by the network device even if the terminal device is in the inactive state or the idle state. The resource configuration method according to embodiments of the present disclosure can reduce energy consumption of the terminal device and enable the terminal device to enjoy the benefits of the dedicated resource.

According to a second aspect, there is provided a resource configuration method, including:
configuring, by a network device, a dedicated transmission resource for a first terminal device, wherein the dedicated transmission resource is used by the first terminal device to perform sidelink data transmission with a second terminal device if the first terminal device is in an inactive state or an idle state; and
sending, by the network device, resource configuration information to the first terminal device which is in a connected state, wherein the resource configuration information is used to indicate the dedicated transmission resource.

In the resource configuration methods according to embodiments of the present disclosure, the network device may configure the dedicated transmission resource for the terminal device, and send the dedicated transmission resource to the terminal device if the terminal device is in the connected state, so that the terminal device may use the dedicated transmission to perform data transmission with other terminal devices if the terminal device is in the inactive state or the idle state. In this way, the terminal device can use the dedicated transmission resource configured by the network device even if the terminal device is in the inactive state or the idle state. The resource configuration method according to embodiments of the present disclosure can reduce energy consumption of the terminal device and enable the terminal device to enjoy the benefits of the dedicated resource.

In connection with the second aspect, in a possible implementation of the second aspect, sending, by the network device, resource configuration information to the first terminal device which is in a connected state, includes:
sending, by the network device, a Radio Resource Control (RRC) message to the first terminal device which is in the connected state, wherein the RRC message includes the resource configuration information.

In connection with the second aspect and the above implementations, in another possible implementation of the second aspect, the RRC message is used to indicate that the first terminal device transits from the connected state to the inactive state or the idle state.

In connection with the second aspect and the above implementations, in another possible implementation of the second aspect, the method further includes:
sending, by the network device, receiving resource information to the first terminal device which is in the connected state, wherein the receiving resource information is used to indicate a receiving resource set, and a resource in the receiving resource set is used for the first terminal device to receive data from a third terminal device if the first terminal device is in the inactive state or the idle state.

In connection with the second aspect and the above implementations, in another possible implementation of the second aspect, sending, by the network device, receiving resource information to the first terminal device which is in the connected state, includes:
sending, by the first terminal device, RRC signaling or a System Information Block (SIB) to the first terminal device which is in the connected state, wherein the RRC signaling and the SIB include the receiving resource information.

In connection with the second aspect and the above implementations, in another possible implementation of the second aspect, sending, by the first terminal device, RRC signaling or a SIB to the first terminal device which is in the connected state, includes:

periodically broadcasting the SIB by the network device.

In connection with the second aspect and the above implementations, in another possible implementation of the second aspect, configuring, by a network device, a dedicated transmission resource for a first terminal device, includes:
determining, by the network device, the dedicated transmission resource from the receiving resource set.

It should be understood that the network device may send the receiving resource set to the second terminal device, so that the second terminal device may receive the data sent from the first terminal device using a resource in the receiving resource set.

In connection with the second aspect and the above implementations, in another possible implementation of the second aspect, configuring, by a network device, a dedicated transmission resource for a first terminal device, includes:
configuring, by the network device, the dedicated transmission resource for a terminal device group, wherein the terminal device group includes at least two terminal devices, and the at least two terminal devices include the first terminal device.

In connection with the second aspect and the above implementations, in another possible implementation of the second aspect, there is no concurrent data transmission by a plurality of terminal devices in the terminal device group;
wherein configuring, by the network device, the dedicated transmission resource for a terminal device group, includes:
configuring, by the network device, the dedicated transmission resource for the terminal device group, wherein only one of the terminal devices in the terminal device group is allowed to send data at a time using the dedicated transmission resource.

In connection with the second aspect and the above implementations, in another possible implementation of the second aspect, a plurality of terminal devices in the terminal device group send data concurrently;
wherein configuring, by the network device, the dedicated transmission resource for a terminal device group, includes:
configuring, by the network device, a plurality of the dedicated transmission resources for the terminal device group, wherein the plurality of terminal devices use different dedicated transmission resources in the plurality of the dedicated transmission resources to concurrently send data.

In connection with the second aspect and the above implementations, in another possible implementation of the second aspect, configuring, by a network device, a dedicated transmission resource for a first terminal device, includes:
determining, by the network device, the dedicated transmission resource by negotiating with another network device, wherein the another network device and the network device are different network devices located in a same Radio Access Network (RAN) area.

It should be noted that the network device may determine the dedicated transmission resource for at least one terminal device by negotiating with other network devices, and the at least one terminal device may include the first terminal device.

In connection with the second aspect and the above implementations, in another possible implementation of the second aspect, the resource configuration information includes an identifier of the first terminal device.

In the resource configuration method according to embodiments of the present disclosure, the network device may configure the dedicated transmission resource for the terminal device, and send the dedicated transmission resource to the terminal device if the terminal device is in the connected state, so that the terminal device may use the dedicated transmission to perform data transmission with other terminal devices if the terminal device is in the inactive state or the idle state. In this way, the terminal device can use the dedicated transmission resource configured by the network device even if the terminal device is in the inactive state or the idle state. The resource configuration method according to embodiments of the present disclosure can reduce energy consumption of the terminal device and enable the terminal device to enjoy the benefits of the dedicated resource.

According to a third aspect, there is provided a terminal device. The terminal device is configured to performing the methods according to the first aspect or any of the possible implementations in the first aspect. In particular, the terminal device includes units for performing the methods according to the first aspect or any of the possible implementations in the first aspect.

According to a fourth aspect, there is provided a network device. The network device is configured to performing the methods according to the second aspect or any of the possible implementations in the second aspect. In particular, the network device includes units for performing the methods according to the second aspect or any of the possible implementations in the second aspect.

According to a fifth aspect, there is provided a terminal device. The terminal device includes a storage unit and a processor. The storage unit is configured to store instructions, and the processor is configured to execute the instructions stored in the memory. When the processor executes the instructions in the memory, the processor is caused to perform the methods according to the first aspect or any of the possible implementations in the first aspect.

According to a sixth aspect, there is provided a network device. The network device includes a storage unit and a processor. The storage unit is configured to store instructions, and the processor is configured to execute the instructions stored in the memory. When the processor executes the instructions in the memory, the processor is caused to perform the methods according to the second aspect or any of the possible implementations in the second aspect.

According to a seventh aspect, there is provided a computer-readable medium. The computer-readable medium is configured to store computer programs. The computer programs include instructions for performing the methods according to the first aspect or any of the possible implementations in the first aspect.

According to an eighth aspect, there is provided a computer-readable medium. The computer-readable medium is configured to store computer programs. The computer programs include instructions for performing the methods according to the second aspect or any of the possible implementations in the second aspect.

According to a ninth aspect, there is provided a computer program product including instructions. When instructions of the computer program product are executed by a computer, the computer performs the resource configuration methods according to the first aspect or any of the possible implementations in the first aspect. According to exemplary embodiments, the computer program product can run on the terminal device according to the third aspect.

According to a tenth aspect, there is provided a computer program product including instructions. When instructions of the computer program product are executed by a computer, the computer performs the resource configuration methods according to the second aspect or any of the possible implementations in the second aspect. According to exemplary embodiments, the computer program product can run on the network device according to the fourth aspect.

### BRIEF DESCRIPTION OF THE DRAWINGS

FIG. 1 is a schematic flowchart of a resource configuration method according to an embodiment of the present disclosure.
FIG. 2 is another schematic flowchart of a resource configuration method according to an embodiment of the present disclosure.
FIG. 3 is a schematic block diagram of a terminal device according to an embodiment of the present disclosure.
FIG. 4 is a schematic block diagram of a network device in accordance with an embodiment of the present disclosure.
FIG. 5 is another schematic block diagram of a terminal device according to an embodiment of the present disclosure.
FIG. 6 is another schematic block diagram of a network device according to an embodiment of the present disclosure.

### DETAILED DESCRIPTION

The technical solutions in the embodiments of the present disclosure will be described below with reference to the accompanying drawings.

The technical solutions of the embodiments of the present disclosure can be applied to various communication systems, such as an LTE system, an LTE Frequency Division Duplex (FDD) system, an LTE Time Division Duplex (TDD) system, and a Universal Mobile Telecommunication System (UMTS), a future fifth generation (5G) system, i.e., the new radio (NR) system, and so on.

The terminal device in the embodiments of the present disclosure may refer to user equipment, an access terminal, a subscriber unit, a subscriber station, a mobile station, a mobile terminal, a remote station, a remote terminal, a mobile device, a user terminal, a terminal, a wireless communication device, a user agent or a user device. The terminal device may be a cellular phone, a cordless phone, a Session Initiation Protocol (SIP) phone, a Wireless Local Loop (WLL) station, a Personal Digital Assistant (PDA), a handled device with wireless communication functions, computing devices or other processing devices connected to wireless modems, in-vehicle devices, wearable devices, terminal devices in future 5G networks, or terminal devices in the future evolutional Public Land Mobile Network (PLMN), and the like. Embodiments of the present disclosure do not impose specific limitations on this.

The network device in the embodiments of the present disclosure may be a device which communicates with a terminal device. For example, the network device may be an evolutional base station (eNB or eNodeB) in the LTE system, or may be a wireless controller in a cloud radio access network (CRAN) scenario, or the network device may be a relay station, an access point, an in-vehicle device, a wearable device, or a network device in the future 5G network or a network device in the future evolutional Public Land Mobile Network (PLMN), and the like. Embodiments of the present disclosure do not impose specific limitations on this.

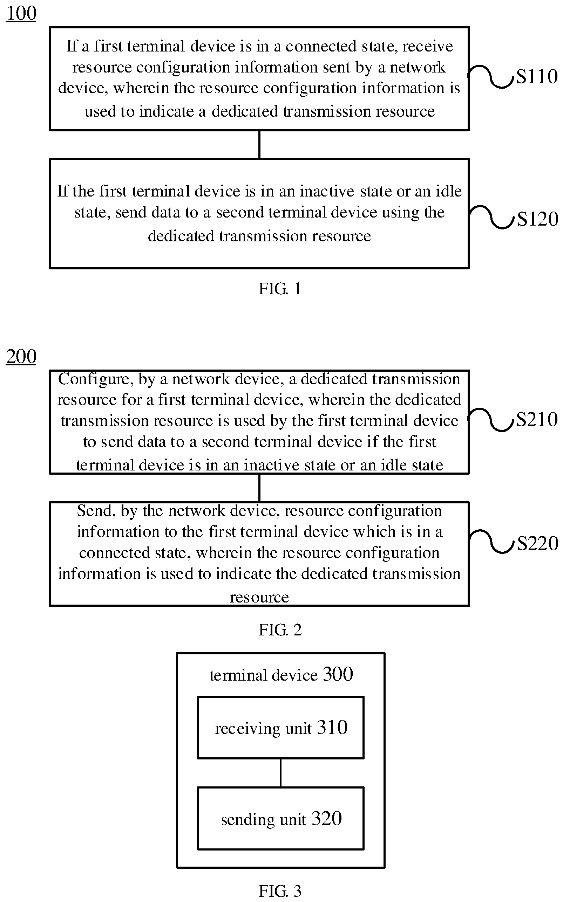

FIG. 1 shows a schematic flowchart of a resource configuration method 100 according to an embodiment of the present disclosure. The method 100 may be performed by a terminal device. As shown in FIG. 1, the method 100 includes:

In S110, if a first terminal device is in a connected state, the first terminal device receives resource configuration information sent by a network device. The resource configuration information is used to indicate a dedicated transmission resource.

In the embodiments of the present disclosure, when the first terminal device is in the connected state, the network device may allocate a dedicated transmission resource to the first terminal device, and send the dedicated transmission resource to the first terminal device by using the resource configuration information. The dedicated transmission resource is used for the first terminal device to send data to a second terminal device. The first terminal device is any one terminal device, and the second terminal device may be any terminal device other than the first terminal device, and the dedicated transmission resource may be a resource pool.

It should be understood that the network device may determine the dedicated transmission resource by negotiating with other network devices. Fro example, different network devices in the same Radio Access Network (RAN) area can negotiate through the Xn interface to configure the dedicated transmission resource(s) for one terminal device or a plurality of terminal devices included in a terminal device group.

It should be understood that the dedicated transmission resources configured by different network devices in the same RAN area for a plurality of terminal devices are different from a shared resource pool. The allocated dedicated transmission resources are dedicated to the plurality of terminal devices. For example, different network devices in the same RAN area may negotiate to determine dedicated transmission resource(s) for the plurality of terminal devices, and send resource configuration information to the first terminal device in the plurality of terminal devices by using one of the network devices. The resource configuration information is used to indicate the dedicated transmission resource configured for the first terminal device.

According to exemplary embodiments, the first terminal device may receive an RRC message sent by the network device. The RRC message includes the resource configuration information, and the resource configuration information indicates the dedicated transmission resource for the first terminal device.

According to exemplary embodiments, the RRC message may be further used to instruct the first terminal device to transit from one state to another state. For example, the first terminal device receives the RRC message sent by the network device, and the RRC message may be used to instruct the first terminal device to transit from the current connected state to the inactive state or the idle state. The first terminal device transits from the connected state to the inactive state or the idle state according to the RRC message. The first terminal device determines the dedicated transmission resource as indicated by the resource configuration information in the RRC message, and uses the dedicated transmission resource to send data using the sidelink. In this way, the terminal device in the active state or the idle state may receive the data sent via the sidelink, without interactions with the network device.

In the embodiment of the present disclosure, the resource configuration information sent by the network device to the first terminal device may further include an identifier of the first terminal device. For example, the network device maintains an index of the terminal device context. The index for the terminal device in the inactive state is unique across multiple network devices. The identifier of the first terminal device may uniquely identify the first terminal device, and the identifier of the first terminal device may indicate that the dedicated transmission resource indicated in the resource configuration information is a resource configured for the first terminal device. According to exemplary embodiments, the first terminal device may also use the identifier as its own identifier, for example as a source address or a destination address in a sidelink transmission. According to exemplary embodiments, the identifier of the first terminal device may be processed, for example, according to a certain Hash algorithm or a truncation algorithm, to generate a short identifier, and the first terminal device is uniquely identified by the truncated identifier. The embodiments of the present disclosure do not impose specific limitations on this.

As shown in FIG. 1, the method 100 further includes:

In S120, if the first terminal device is in an inactive state or an idle state, the first terminal device sends data to a second terminal device using the dedicated transmission resource. The second terminal device may be any other terminal device than the first terminal device.

It should be understood that the dedicated transmission resource configured by the network device for the first terminal device may correspond to only the first terminal device, or may correspond to a terminal device group including the first terminal device. For example, the network device may allocate the dedicated transmission resource only to the first terminal device, and the first terminal device may use the resource in an exclusive manner according to the configured dedicated transmission resource in a configured time. According to exemplary embodiments, the network device may also configure the dedicated transmission resource for the terminal device group, the first terminal device belongs to the terminal device group, and the terminal device group may use the dedicated transmission resource.

In the embodiments of the present disclosure, in the case where the network device allocates a transmission resource for sidelink to the terminal device group, if a certain group relationship exists in the terminal device group and there is no concurrent transmission performed by at least two terminal devices in the terminal device group, the network device may allocate one dedicated transmission resource to the terminal device group. For example, the network device allocates one dedicated transmission resource to the terminal device group, and each terminal device in the terminal device group uses this dedicated transport resource. If there is no certain group relationship in the terminal device group, that is, a plurality of terminal devices in the terminal device group may concurrently send data, the network device may allocate a plurality of dedicated transmission resources for the terminal device group, so that a plurality of terminal devices may use different dedicated transmission resources to concurrently transmit data or information.

According to exemplary embodiments, if the network device allocates the same dedicated transmission resource to a terminal device group, for example, the same resource pool is allocated, the network device may identify the dedicated transmission resource by using the identifier of the terminal device group. For example, the resource configuration information sent by the network device to any one terminal device in the terminal device group for indicating the dedicated transmission resource may include an identifier of the terminal device group, so that each terminal device in the terminal device group can use the dedicated transmission resource.

According to exemplary embodiments, the first terminal device may use the dedicated transmission resource to send data to the second terminal device. Also, the first terminal device may use a shared resource pool to send data to the second terminal device, rather than using the dedicated transmission resource. For example, by sensing, the first terminal device may use a resource in the shared resource pool to perform sidelink data transmission. Embodiments of the present disclosure do not impose specific limitations on this.

In embodiments of the present disclosure, the method 100 may further include: receiving by the first terminal device receiving resource information sent from the network device, wherein the receiving resource information is used to indicate a receiving resource set, so that when the first terminal device is in the inactive state or the idle state, the first terminal device may use a resource in the receiving resource set to receive data sent by a third terminal device. The third terminal device is any other terminal device than the first terminal device.

It should be understood that the network device allocates a receiving resource set which is used for receiving data or information to at least one terminal device, and sends the receiving resource set to the at least one terminal device by using SIB or RRC signaling. For example, the network device may send receiving resource information which includes the receiving resource set, so that each terminal device in the at least one terminal device determines from the receiving resource set a resource for receiving data sent by other terminal device.

According to exemplary embodiments, the network device may send the receiving resource information including the receiving resource set to the at least one terminal device by using a periodically broadcasted SIB. Alternatively, the network device may allocate the receiving resource set to the at least one terminal device according to an on-demand request sent by any terminal device in the at least one terminal device.

In embodiments of the present disclosure, the network device sends the receiving resource information to the first terminal device. The receiving resource information is used to indicate the receiving resource set. The first terminal device may use a resource in the receiving resource set to receive the data sent by other terminal devices. According to exemplary embodiments, the network device may determine a part of resources in the receiving resource set as the dedicated transmission resource, send the dedicated transmission resource to the first terminal device, and send the receiving resource set to the second terminal device. The first terminal device may use the dedicated transmission resource to send data to the second terminal device, and the second terminal device may determine a receiving resource according to the receiving resource set to receive the data sent by the first terminal device.

In the resource configuration methods according to embodiments of the present disclosure, the terminal device receives the dedicated transmission resource allocated by the network device if the terminal device is in the connected state, and uses the dedicated transmission resource to perform data transmission with other terminal devices if the terminal device in the inactive state or the idle state. In this way, the terminal device can use the dedicated transmission resource configured by the network device even if the terminal device is in the inactive state or the idle state. The resource configuration method according to embodiments of the present disclosure can reduce energy consumption of the terminal device and enable the terminal device to enjoy the benefits of the dedicated resource.

The resource configuration methods according to embodiments of the present disclosure are described in detail from the perspective of the terminal device with reference to FIG. 1. The resource configuration methods according to embodiments of the present disclosure will be described below from the perspective of the network device with reference to FIG. 2.

FIG. 2 shows a schematic flowchart of a resource configuration method 200 according to an embodiment of the present disclosure. The method 200 may be performed by a network device. As shown in FIG. 2, the method 200 includes:

In S210, the network device configures a dedicated transmission resource for a first terminal device. The dedicated transmission resource is used by the first terminal device to send data to a second terminal device if the first terminal device is in an inactive state or an idle state.

In S220, the network device sends resource configuration information to the first terminal device which is in a connected state. The resource configuration information is used to indicate the dedicated transmission resource.

In the resource configuration method according to embodiments of the present disclosure, the network device may configure the dedicated transmission resource for the terminal device, and send the dedicated transmission resource to the terminal device if the terminal device is in the connected state, so that the terminal device may use the dedicated transmission to perform data transmission with other terminal devices if the terminal device is in the inactive state or the idle state. In this way, the terminal device can use the dedicated transmission resource configured by the network device even if the terminal device is in the inactive state or the idle state. The resource configuration method according to embodiments of the present disclosure can reduce energy consumption of the terminal device and enable the terminal device to enjoy the benefits of the dedicated resource.

According to exemplary embodiments, sending, by the network device, resource configuration information to the first terminal device which is in a connected state, includes:
sending, by the network device, a Radio Resource Control (RRC) message to the first terminal device which is in the connected state, wherein the RRC message includes the resource configuration information.

According to exemplary embodiments, the RRC message is used to indicate that the first terminal device transits from the connected state to the inactive state or the idle state.

According to exemplary embodiments, the method 200 further includes:
sending, by the network device, receiving resource information to the first terminal device which is in the connected state, wherein the receiving resource information is used to indicate a receiving resource set, and a resource in the receiving resource set is used for the first terminal device to receive data from a third terminal device if the first terminal device is in the inactive state or the idle state.

According to exemplary embodiments, sending, by the network device, receiving resource information to the first terminal device which is in the connected state, includes:
sending, by the first terminal device, RRC signaling or a System Information Block (SIB) to the first terminal device which is in the connected state, wherein the RRC signaling and the SIB includes the receiving resource information.

According to exemplary embodiments, sending, by the first terminal device, RRC signaling or a SIB to the first terminal device which is in the connected state, includes:
periodically broadcasting the SIB by the network device.

According to exemplary embodiments, configuring, by a network device, a dedicated transmission resource for a first terminal device, includes:
determining, by the network device, the dedicated transmission resource from the receiving resource set.

According to exemplary embodiments, configuring, by a network device, a dedicated transmission resource for a first terminal device, includes:
configuring, by the network device, the dedicated transmission resource for a terminal device group, wherein the terminal device group includes at least two terminal devices, and the at least two terminal devices includes the first terminal device.

According to exemplary embodiments, there is no concurrent data transmission by a plurality of terminal devices in the terminal device group;
configuring, by the network device, the dedicated transmission resource for a terminal device group, includes:
configuring, by the network device, the dedicated transmission resource for the terminal device group, wherein only one of the terminal devices in the terminal device group is allowed to send data at a time using the dedicated transmission resource.

According to exemplary embodiments, a plurality of terminal devices in the terminal device group send data concurrently;
wherein configuring, by the network device, the dedicated transmission resource for a terminal device group, includes:
configuring, by the network device, a plurality of the dedicated transmission resources for the terminal device group, wherein the plurality of terminal devices use different dedicated transmission resources in the plurality of the dedicated transmission resources to concurrently send data.

According to exemplary embodiments, configuring, by a network device, a dedicated transmission resource for a first terminal device, includes:
determining, by the network device, the dedicated transmission resource by negotiating with another network device, wherein the another network device and the network device are different network devices located in a same Radio Access Network (RAN) area.

According to exemplary embodiments, the resource configuration information includes an identifier of the first terminal device.

It should be understood that the network device in the method 200 in the embodiments of the present disclosure corresponds to the network device in the method 100, and the first terminal device in the method 200 corresponds to the first terminal device in the method 100, and details are not described herein again.

In the resource configuration methods according to embodiments of the present disclosure, the network device may configure the dedicated transmission resource for the terminal device, and send the dedicated transmission resource to the terminal device if the terminal device is in the connected state, so that the terminal device may use the dedicated transmission to perform data transmission with other terminal devices if the terminal device is in the inactive state or the idle state. In this way, the terminal device can use the dedicated transmission resource configured by the network device even if the terminal device is in the inactive state or the idle state. The resource configuration method according to embodiments of the present disclosure can reduce energy consumption of the terminal device and enable the terminal device to enjoy the benefits of the dedicated resource.

It should be understood that, in the various embodiments of the present disclosure, the sequence numbers of the foregoing processes do not mean the order of execution sequence, and the order of execution of the processes should be determined by their functions and internal logics, and the sequence numbers are not intended to impose any limitation on the present disclosure.

The resource configuration methods according to embodiments of the present disclosure are described in detail above with reference to FIG. 1 to FIG. 2. Terminal devices and network devices according to embodiments of the present disclosure will be described below with reference to FIG. 3 to FIG. 6.

As shown in FIG. 3, the terminal device 300 according to an embodiment of the present disclosure includes a receiving unit 310 and a sending unit 320.

The receiving unit 310 is configured to, if the terminal device 300 is in a connected state, receive resource configuration information sent by a network device. The resource configuration information is used to indicate a dedicated transmission resource.

The sending unit 320 is configured to, if the terminal device 300 is in an inactive state or an idle state, send data to a second terminal device using the dedicated transmission resource.

The terminal device according to embodiments of the present disclosure receives the dedicated transmission resource allocated by the network device if the terminal device is in the connected state, and uses the dedicated transmission resource to perform data transmission with other terminal devices if the terminal device in the inactive state or the idle state. In this way, the terminal device can use the dedicated transmission resource configured by the network device even if the terminal device is in the inactive state or the idle state. The embodiments of the present disclosure can reduce energy consumption of the terminal device and enable the terminal device to enjoy the benefits of the dedicated resource.

According to exemplary embodiments, the receiving unit 310 is configured to:
receive a Radio Resource Control (RRC) message sent by the network device if the terminal device is in the connected state, wherein the RRC message includes the resource configuration information.

According to exemplary embodiments, the RRC message is used to indicate that the terminal device transits from the connected state to the inactive state or the idle state.

According to exemplary embodiments, the receiving unit 310 is further configured to:
if the terminal device 300 is in the connected state, receive from the network device receiving resource information, wherein the receiving resource information is used to indicate a receiving resource set; and
if the terminal device 300 is in the inactive state or the idle state, receive data sent from a third terminal device using a resource in the receiving resource set.

According to exemplary embodiments, the receiving unit 310 is configured to:
receive RRC signaling or a System Information Block (SIB) sent by the network device if the terminal device is in the connected state, wherein the RRC signaling and the SIB include the receiving resource information.

According to exemplary embodiments, the receiving unit 310 is configured to:
receive the SIB periodically broadcast by the network device if the terminal device is in the connected state.

According to exemplary embodiments, the dedicated transmission resource belongs to the receiving resource set.

According to exemplary embodiments, the dedicated transmission resource is used for a terminal device group to transmit data, the terminal device group includes at least two terminal devices, and the at least two terminal devices include the terminal device.

According to exemplary embodiments, there is no concurrent data transmission by a plurality of terminal devices in the terminal device group, and only one of the terminal devices in the terminal device group is allowed to send data at a time using the dedicated transmission resource.

According to exemplary embodiments, a plurality of terminal devices in the terminal device group send data concurrently, and the plurality of terminal devices use different dedicated transmission resources to concurrently send data.

According to exemplary embodiments, the resource configuration information includes an identifier of the terminal device 300.

According to exemplary embodiments, the identifier of the first terminal device is used to indicate a source address by which the first terminal device sends data to the second terminal device.

It should be understood that the terminal device 300 according to the embodiments of the present disclosure may be configured to perform the method 100 in the embodiments of the present disclosure, and the foregoing and other operations and/or functions of respective units in the terminal device 300 are used to implement corresponding processes of the terminal devices in the methods described with reference to FIG. 1 and FIG. 2. For brevity, repeated descriptions are omitted herein.

The terminal device according to embodiments of the present disclosure receives the dedicated transmission resource allocated by the network device if the terminal device is in the connected state, and uses the dedicated transmission resource to perform data transmission with other terminal devices if the terminal device in the inactive state or the idle state. In this way, the terminal device can use the dedicated transmission resource configured by the network device even if the terminal device is in the inactive state or the idle state. The embodiments of the present disclosure can reduce energy consumption of the terminal device and enable the terminal device to enjoy the benefits of the dedicated resource.

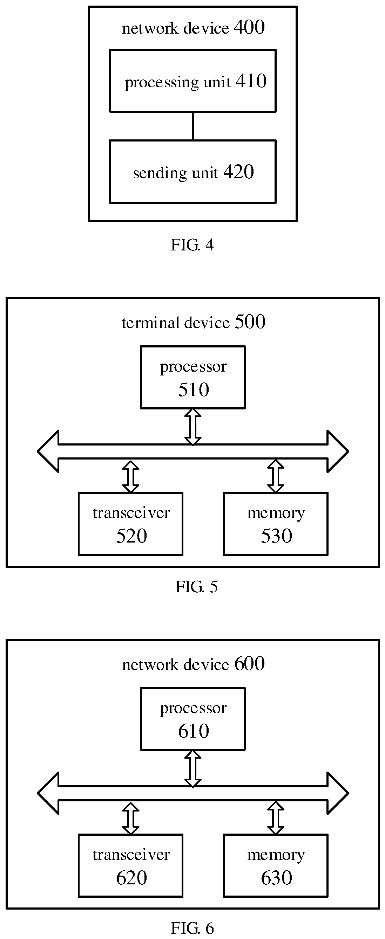

As shown in FIG. 4, the network device 400 according to an embodiment of the present disclosure includes a processing unit 410 and a sending unit 420.

The processing unit 410 is configured to, configure a dedicated transmission resource for a first terminal device. The dedicated transmission resource is used by the first terminal device to send data to a second terminal device if the first terminal device is in an inactive state or an idle state.

The sending unit 420 is configured to send resource configuration information to the first terminal device which is in a connected state. The resource configuration information is used to indicate the dedicated transmission resource.

The network device according to embodiments of the present disclosure may configure the dedicated transmission resource for the terminal device, and send the dedicated transmission resource to the terminal device if the terminal device is in the connected state, so that the terminal device may use the dedicated transmission to perform data transmission with other terminal devices if the terminal device is in the inactive state or the idle state. In this way, the terminal device can use the dedicated transmission resource configured by the network device even if the terminal device is in the inactive state or the idle state. The embodiments of the present disclosure can reduce energy consumption of the terminal device and enable the terminal device to enjoy the benefits of the dedicated resource.

According to exemplary embodiments, the sending unit 420 is configured to:
send a Radio Resource Control (RRC) message to the first terminal device which is in the connected state, wherein the RRC message includes the resource configuration information.

According to exemplary embodiments, the RRC message is used to indicate that the first terminal device transits from the connected state to the inactive state or the idle state.

According to exemplary embodiments, the sending unit 420 is further configured to:
send receiving resource information to the first terminal device which is in the connected state, wherein the receiving resource information is used to indicate a receiving resource set, and a resource in the receiving resource set is used for the first terminal device to receive data from a third terminal device if the first terminal device is in the inactive state or the idle state.

According to exemplary embodiments, the sending unit 420 is configured to:
send RRC signaling or a System Information Block (SIB) to the first terminal device which is in the connected state, wherein the RRC signaling and the SIB includes the receiving resource information.

According to exemplary embodiments, the sending unit 420 is configured to:
periodically broadcast the SIB.

According to exemplary embodiments, the processing unit 410 is configured to:
determine the dedicated transmission resource from the receiving resource set.

According to exemplary embodiments, the processing unit 410 is configured to:
configure the dedicated transmission resource for a terminal device group, wherein the terminal device group includes at least two terminal devices, and the at least two terminal devices include the first terminal device.

According to exemplary embodiments, there is no concurrent data transmission by a plurality of terminal devices in the terminal device group;
the processing unit 410 is configured to:
configure the dedicated transmission resource for the terminal device group, wherein only one of the terminal devices in the terminal device group is allowed to send data at a time using the dedicated transmission resource.

According to exemplary embodiments, a plurality of terminal devices in the terminal device group send data concurrently;
the processing unit 410 is configured to:
configure a plurality of the dedicated transmission resources for the terminal device group, wherein the plurality of terminal devices use different dedicated transmission resources in the a plurality of the dedicated transmission resources to concurrently send data.

According to exemplary embodiments, the processing unit 410 is configured to:
determine the dedicated transmission resource by negotiating with another network device, wherein the another network device and the network device are different network devices located in a same Radio Access Network (RAN) area.

According to exemplary embodiments, the resource configuration information includes an identifier of the first terminal device.

It should be understood that the network device 400 according to the embodiments of the present disclosure may be configured to perform the method 200 in the embodiments of the present disclosure, and the foregoing and other operations and/or functions of respective units in the network device 400 are used to implement corresponding processes of the network devices in the methods described with reference to FIG. 1 and FIG. 2. For brevity, repeated descriptions are omitted herein.

The network device according to embodiments of the present disclosure may configure the dedicated transmission resource for the terminal device, and send the dedicated transmission resource to the terminal device if the terminal device is in the connected state, so that the terminal device may use the dedicated transmission to perform data transmission with other terminal devices if the terminal device is in the inactive state or the idle state. In this way, the terminal device can use the dedicated transmission resource configured by the network device even if the terminal device is in the inactive state or the idle state. The embodiments of the present disclosure can reduce energy consumption of the terminal device and enable the terminal device to enjoy the benefits of the dedicated resource.

FIG. 5 shows a schematic block diagram of a terminal device 500 according to an embodiment of the present disclosure. As shown in FIG. 5, the terminal device 500 includes a processor 510 and a transceiver 520. The processor 510 is connected to the transceiver 520. According to an exemplary embodiment, the terminal device 500 may further include a memory 530, and the memory 530 is connected to the processor 510. The processor 510, the memory 530, and the transceiver 520 communicate with each other through an internal connection path to transfer and/or control data signals. The memory 530 can be used to store instructions, and the processor 510 is configured to execute the instructions in the memory 530 to control the transceiver 520 to send information or signals. The transceiver 520 is configured to: if the terminal device 500 is in a connected state, receive resource configuration information sent by a network device. The resource configuration information is used to indicate a dedicated transmission resource. The transceiver 520 is further configured to: if the terminal device 500 is in an inactive state or an idle state, send data to a second terminal device using the dedicated transmission resource.

The terminal device according to embodiments of the present disclosure receives the dedicated transmission resource allocated by the network device if the terminal device is in the connected state, and uses the dedicated transmission resource to perform data transmission with other terminal devices if the terminal device in the inactive state or the idle state. In this way, the terminal device can use the dedicated transmission resource configured by the network device even if the terminal device is in the inactive state or the idle state. The embodiments of the present disclosure can reduce energy consumption of the terminal device and enable the terminal device to enjoy the benefits of the dedicated resource.

According to exemplary embodiments, the receiving unit 310 is configured to:
receive a Radio Resource Control (RRC) message sent by the network device if the terminal device is in the connected state, wherein the RRC message includes the resource configuration information.

According to exemplary embodiments, the RRC message is used to indicate that the terminal device transits from the connected state to the inactive state or the idle state.

According to exemplary embodiments, the receiving unit 310 is further configured to:
if the terminal device 500 is in the connected state, receive from the network device receiving resource information, wherein the receiving resource information is used to indicate a receiving resource set; and
if the terminal device 500 is in the inactive state or the idle state, receive data sent from a third terminal device using a resource in the receiving resource set.

According to exemplary embodiments, the receiving unit 310 is configured to:
receive RRC signaling or a System Information Block (SIB) sent by the network device if the terminal device is in the connected state, wherein the RRC signaling and the SIB include the receiving resource information.

According to exemplary embodiments, the receiving unit 310 is configured to:
receive the SIB periodically broadcast by the network device if the terminal device 500 is in the connected state.

According to exemplary embodiments, the dedicated transmission resource belongs to the receiving resource set.

According to exemplary embodiments, the dedicated transmission resource is used for a terminal device group to transmit data, the terminal device group includes at least two terminal devices, and the at least two terminal devices include the terminal device 500.

According to exemplary embodiments, there is no concurrent data transmission by a plurality of terminal devices in the terminal device group, and only one of the terminal devices in the terminal device group is allowed to send data at a time using the dedicated transmission resource.

According to exemplary embodiments, a plurality of terminal devices in the terminal device group send data concurrently, and the plurality of terminal devices use different dedicated transmission resources to concurrently send data.

According to exemplary embodiments, the resource configuration information includes an identifier of the terminal device 500.

According to exemplary embodiments, the identifier of the terminal device 500 is used to indicate a source address by which the first terminal device sends data to the second terminal device.

It should be understood that the terminal device 500 according to the embodiments of the present disclosure may correspond to the terminal device 300 in the embodiments of the present disclosure, and may be configured to perform the method 100 according to the embodiments of the present disclosure. The foregoing and other operations and/or functions of respective units in the terminal device 500 are used to implement corresponding processes of the terminal devices in the methods described with reference to FIG. 1 and FIG. 2. For brevity, repeated descriptions are omitted herein.

The terminal device according to embodiments of the present disclosure receives the dedicated transmission resource allocated by the network device if the terminal device is in the connected state, and uses the dedicated transmission resource to perform data transmission with other terminal devices if the terminal device in the inactive state or the idle state. In this way, the terminal device can use the dedicated transmission resource configured by the network device even if the terminal device is in the inactive state or the idle state. The embodiments of the present disclosure can reduce energy consumption of the terminal device and enable the terminal device to enjoy the benefits of the dedicated resource.

FIG. 6 shows a schematic block diagram of a network device 600 according to an embodiment of the present resource. As shown in FIG. 6, the network device 600 includes a processor 610 and a transceiver 620. The processor 610 is connected to the transceiver 620. According to an exemplary embodiment, the network device 600 also includes a memory 630. The memory 630 is coupled to the processor 610. The processor 610, the memory 630 and the transceiver 620 communicate with each other through an internal connection path to transfer and/or control data signals. The memory 630 can be used to store instructions, and the processor 610 is configured to execute the instructions in the memory 630 to control the transceiver 620 to send information or signals. The processor 610 is configured to: configure a dedicated transmission resource for a first terminal device, wherein the dedicated transmission resource is used by the first terminal device to send data to a second terminal device if the first terminal device is in an inactive state or an idle state. The transceiver 620 is configured to: send resource configuration information to the first terminal device which is in a connected state, wherein the resource configuration information is used to indicate the dedicated transmission resource.

The network device according to embodiments of the present disclosure may configure the dedicated transmission resource for the terminal device, and send the dedicated transmission resource to the terminal device if the terminal device is in the connected state, so that the terminal device may use the dedicated transmission to perform data transmission with other terminal devices if the terminal device is in the inactive state or the idle state. In this way, the terminal device can use the dedicated transmission resource configured by the network device even if the terminal device is in the inactive state or the idle state. The embodiments of the present disclosure can reduce energy consumption of the terminal device and enable the terminal device to enjoy the benefits of the dedicated resource.

According to exemplary embodiments, the transceiver 620 is configured to:
send a Radio Resource Control (RRC) message to the first terminal device which is in the connected state, wherein the RRC message includes the resource configuration information.

According to exemplary embodiments, the RRC message is used to indicate that the first terminal device transits from the connected state to the inactive state or the idle state.

According to exemplary embodiments, the transceiver 620 is further configured to:
send receiving resource information to the first terminal device which is in the connected state, wherein the receiving resource information is used to indicate a receiving resource set, and a resource in the receiving resource set is used for the first terminal device to receive data from a third terminal device if the first terminal device is in the inactive state or the idle state.

According to exemplary embodiments, the transceiver 620 is configured to:
send RRC signaling or a System Information Block (SIB) to the first terminal device which is in the connected state, wherein the RRC signaling and the SIB include the receiving resource information.

According to exemplary embodiments, the transceiver 620 is configured to:
periodically broadcast the SIB.

According to exemplary embodiments, the processor 610 is configured to:
determine the dedicated transmission resource from the receiving resource set.

According to exemplary embodiments, the processor 610 is configured to:
configure the dedicated transmission resource for a terminal device group, wherein the terminal device group includes at least two terminal devices, and the at least two terminal devices include the first terminal device.

According to exemplary embodiments, there is no concurrent data transmission by a plurality of terminal devices in the terminal device group; the processor 610 is configured to: configure the dedicated transmission resource for the terminal device group, wherein only one of the terminal devices in the terminal device group is allowed to send data at a time using the dedicated transmission resource.

According to exemplary embodiments, a plurality of terminal devices in the terminal device group send data concurrently; the processor 610 is configured to: configure a plurality of the dedicated transmission resources for the terminal device group, wherein the plurality of terminal devices use different dedicated transmission resources in the a plurality of the dedicated transmission resources to concurrently send data.

According to exemplary embodiments, the processor 610 is configured to:
determine the dedicated transmission resource by negotiating with another network device, wherein the another network device and the network device are different network devices located in a same Radio Access Network (RAN) area.

According to exemplary embodiments, the resource configuration information includes an identifier of the first terminal device.

It should be understood that the network device 600 according to the embodiments of the present disclosure may correspond to the network device 400 in the embodiments of the present disclosure, and may be configured to perform the method 200 according to the embodiments of the present disclosure. The foregoing and other operations and/or functions of respective units in the network device 600 are used to implement corresponding processes of the network devices in the methods described with reference to FIG. 1 and FIG. 2. For brevity, repeated descriptions are omitted herein.

The network device according to embodiments of the present disclosure may configure the dedicated transmission resource for the terminal device, and send the dedicated transmission resource to the terminal device if the terminal device is in the connected state, so that the terminal device may use the dedicated transmission to perform data transmission with other terminal devices if the terminal device is in the inactive state or the idle state. In this way, the terminal device can use the dedicated transmission resource configured by the network device even if the terminal device is in the inactive state or the idle state. The embodiments of the present disclosure can reduce energy consumption of the terminal device and enable the terminal device to enjoy the benefits of the dedicated resource.

It should be understood that the method embodiments of the present disclosure may be applied in one or more processors, or may be implemented by one or more processors. The processors in the embodiments of the present disclosure may be an integrated circuit chip which has signal processing capability. During implementation, each step of the foregoing method embodiments can be completed by an integrated hardware logic circuit in the processors or software instructions. Each of the above-described processors can be a general-purpose processor, a Digital Signal Processors (DSPs), an Application Specific Integrated Circuit (ASIC), a Field Programmable Gate Array (FPGA) or other programmable logic devices, discrete gates or transistor logic devices, discrete hardware components, which can implement or perform the methods, steps, and logical block diagrams disclosed in the embodiments of the present disclosure. The general-purpose processor can be a microprocessor or any conventional processor. The steps of the methods disclosed in the embodiments of the present disclosure can be directly completed by a hardware decoding processor, or by a combination of hardware and software modules in the decoding processor. The software modules can be located in a storage medium that is well-known in the art such as a random access memory, a flash memory, a read only memory, a programmable read only memory or an electrically erasable programmable memory, a register. The storage medium is located in the memory and the processor reads information in the memory and completes the steps of the above-described methods with its hardware.

It can be understood that the memory in the embodiments of the present disclosure can be a volatile memory or a non-volatile memory, or can include both volatile memory and non-volatile memory. The non-volatile memory can be a Read-Only Memory (ROM), a Programmable ROM (PROM), an Erasable PROM (EPROM), an Electrically EPROM (EEPROM) or a flash memory. The volatile memory can be a Random Access Memory (RAM) that serves as an external cache. By exemplary rather than limiting way, many forms of RAMs can be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM). It should be noted that the memories in the systems and methods described herein are intended to include, but not limited to, these and any other suitable types of memories.

Those of ordinary skill in the art will appreciate that the exemplary units and algorithm steps described according to the embodiments disclosed herein can be carried out by electronic hardware or a combination of electronic hardware and computer software. Whether the functions are implemented by hardware or software depends on particular applications and design constraints of the technical solutions. For each of the particular applications, a person skilled in the art can use different methods to implement the described functions, but such implementation should not be considered as beyond the scope of the present disclosure.

It may be clearly understood by those skilled in the art that details of specific operation procedures of the systems, devices and units can be found in the previous description regarding the method embodiments.

In the embodiments provided in the present disclosure, it should be understood that the disclosed systems, devices and methods may be implemented in other ways. For example, the device embodiments described above are merely illustrative. For example, the division of the units is only a kind of logical function division. In practice, other division manner may be used. For example, multiple units or components may be combined or integrated into another system, or some features may be ignored or not performed. In addition, the illustrated or discussed mutual coupling or direct coupling or communication connection may be indirect coupling or communication connection through some interfaces, devices or units, and may be in electrical, mechanical or other forms.

The units described as separated parts may or may not be physically separated, and the parts displayed as units may or may not be physical units, that is, the units may be located in one place, or may be distributed over multiple network units. Some or all of the units may be selected according to actual needs to achieve the objectives of the solutions in the embodiments.

In addition, the functional units in the embodiments of the present disclosure may be integrated in one processing unit, or the units may exist alone physically, or two or more units may be integrated in one unit.

The functions may also be stored in a computer-readable storage medium if being implemented in the form of a software functional unit and sold or used as an independent product. Based on such understanding, the essence of the technical solutions of the present disclosure, or the part contributing to the prior art or part of the technical solutions, may be embodied in the form of a software product. The computer software product is stored in a storage medium including a number of instructions such that a computer device (which may be a personal computer, a server, or a network device, etc.) performs all or part of steps of the method described in each of the embodiments of the present disclosure. The foregoing storage medium includes: any medium that is capable of storing program codes such as a USB disk, a mobile hard disk, a Read-Only Memory (ROM), a Random Access Memory (RAM), a magnetic disk or an optical disk, and the like.

The foregoing descriptions are merely exemplary embodiments of the present disclosure, but the protection scope of the present disclosure is not limited thereto. Any person skilled in the art can easily think of changes or substitutions within the technical scope of the present disclosure, and all the changes or substitutions should be covered by the protection scope of the present disclosure. Therefore, the protection scope of the present disclosure should be defied by the appended claims.

## Claims

1. A resource configuration method, **characterized in that** the method comprises:
if a first terminal device is in a RRC connected state, receiving (S110) resource configuration information sent by a network device, wherein the resource configuration information is used to indicate a dedicated transmission resource; and
if the first terminal device is in a RRC inactive state, performing sidelink data transmission with a second terminal device using the dedicated transmission resource which is configured by the network device when the first terminal device is in the RRC connected state.

2. The method according to claim 1, wherein receiving resource configuration information sent by a network device comprises:
receiving, by the first terminal device, a Radio Resource Control, RRC, message sent by the network device, wherein the RRC message comprises the resource configuration information.

3. The method according to claim 2, wherein the RRC message is used to indicate that the first terminal device transits from the RRC connected state to the RRC inactive state.

4. The method according to any one of claims 1 to 3, further comprising:
if the first terminal device is in the RRC connected state, receiving from the network device receiving resource information, wherein the receiving resource information is used to indicate a receiving resource set; and
if the first terminal device is in the RRC inactive state, receiving data sent from a third terminal device using a resource in the receiving resource set.

5. The method according to claim 4, wherein receiving from the network device receiving resource information, comprises:
receiving, by the first terminal device, RRC signaling or a System Information Block, SIB, sent by the network device, wherein the RRC signaling and the SIB comprise the receiving resource information.

6. The method according to claim 5, wherein receiving, by the first terminal device, RRC signaling or a SIB sent by the network device comprises:
receiving, by the first terminal device, the SIB periodically broadcast by the network device.

7. The method according to any one of claims 4 to 6, wherein the dedicated transmission resource belongs to the receiving resource set.

8. The method according to any one of claims 1 to 7, wherein the dedicated transmission resource is used for a terminal device group to transmit data, the terminal device group comprises at least two terminal devices, and the at least two terminal devices comprise the first terminal device.

9. The method according to claim 8, wherein there is no concurrent data transmission by a plurality of terminal devices in the terminal device group, and only one of the terminal devices in the terminal device group is allowed to send data at a time using the dedicated transmission resource; or
wherein a plurality of terminal devices in the terminal device group send data concurrently, and the plurality of terminal devices use different dedicated transmission resources to concurrently send data.

10. The method according to any one of claims 1 to 9, wherein the resource configuration information comprises an identifier of the first terminal device.

11. The method according to claim 10, wherein the identifier of the first terminal device is used to indicate a source address by which the first terminal device sends data to the second terminal device.

12. A resource configuration method, comprising:
configuring, by a network device, a dedicated transmission resource for a first terminal device, wherein the dedicated transmission resource is used by the first terminal device to perform sidelink data transmission with a second terminal device if the first terminal device is in a RRC inactive state; and
sending, by the network device, resource configuration information to the first terminal device which is in a RRC connected state, wherein the resource configuration information is used to indicate the dedicated transmission resource.

13. The method according to claim 12, wherein sending, by the network device, resource configuration information to the first terminal device which is in a RRC connected state, comprises:
sending, by the network device, a Radio Resource Control, RRC, message to the first terminal device which is in the RRC connected state, wherein the RRC message comprises the resource configuration information.

14. The method according to claim 13, wherein the RRC message is used to indicate that the first terminal device transits from the RRC connected state to the RRC inactive state.

15. The method according to any one of claims 12 to 14, further comprising:
sending, by the network device, receiving resource information to the first terminal device which is in the RRC connected state, wherein the receiving resource information is used to indicate a receiving resource set, and a resource in the receiving resource set is used for the first terminal device to receive data from a third terminal device if the first terminal device is in the RRC inactive state.

16. The method according to claim 15, wherein sending, by the network device, receiving resource information to the first terminal device which is in the RRC connected state, comprises:
sending, by the first terminal device, RRC signaling or a System Information Block, SIB, to the first terminal device which is in the RRC connected state, wherein the RRC signaling and the SIB comprise the receiving resource information.

17. The method according to claim 16, wherein sending, by the first terminal device, RRC signaling or a SIB to the first terminal device which is in the RRC connected state, comprises:
periodically broadcasting the SIB by the network device.

18. The method according to any one of claims 15 to 17, wherein configuring, by a network device, a dedicated transmission resource for a first terminal device, comprises:
determining, by the network device, the dedicated transmission resource from the receiving resource set.

19. A terminal device, configured to perform the method of any one of claims 1-11.

20. A network device, configured to perform the method of any one of claims 12-18.

## Patentansprüche

1. Ressourcenkonfigurationsverfahren, **dadurch gekennzeichnet, dass** das Verfahren umfasst:
wenn eine erste Endgerätevorrichtung sich in einem RRC-Verbindungszustand befindet, Empfangen (S110) von Ressourcenkonfigurationsinformationen, die durch eine Netzwerkvorrichtung gesendet werden, wobei die Ressourcenkonfigurationsinformationen dazu verwendet werden, eine dedizierte Übertragungsressource anzugeben; und
wenn sich die erste Endgerätevorrichtung in einem RRC-Inaktivzustand befindet, Durchführen einer Sidelink-Datenübertragung mit einer zweiten Endgerätevorrichtung unter Verwendung der dedizierten Übertragungsressource, die durch die Netzwerkvorrichtung ausgelegt ist, wenn sich die erste Endgerätevorrichtung im RRC-Verbindungszustand befindet.

2. Verfahren nach Anspruch 1, wobei das Empfangen der von einer Netzwerkvorrichtung gesendeten Ressourcenkonfigurationsinformationen umfasst:
Empfangen einer durch die Netzwerkvorrichtung gesendeten Radio Resource Control-, RRC-, Nachricht durch die erste Endgerätevorrichtung, wobei die RRC-Nachricht die Ressourcenkonfigurationsinformationen umfasst.

3. Verfahren nach Anspruch 2, wobei die RRC-Nachricht verwendet wird, um anzugeben, dass die erste Endgerätvorrichtung vom RRC-Verbindungszustand in den RRC-Inaktivzustand übergeht.

4. Verfahren nach einem der Ansprüche 1 bis 3, ferner umfassend:
wenn die erste Endgerätevorrichtung sich im RRC-Verbindungszustand befindet, Empfangen von Empfangsressourceninformationen von der Netzwerkvorrichtung, wobei die Empfangsressourceninformationen verwendet werden, um einen Empfangsressourcensatz anzugeben; und
wenn sich die erste Endgerätevorrichtung im RRC-Inaktivzustand befindet, Empfangen von Daten, die von einer dritten Endgerätevorrichtung unter Verwendung einer Ressource im Empfangsressourcensatz gesendet werden.

5. Verfahren nach Anspruch 4, wobei das Empfangen von Empfangsressourceninformationen von der Netzwerkvorrichtung umfasst:
Empfangen, durch die erste Endgerätevorrichtung, einer RRC-Signalisierung oder eines von der Netzwerkvorrichtung gesendeten Systeminformationsblocks, SIB, wobei die RRC-Signalisierung und der SIB die Empfangsressourceninformationen umfassen.

6. Verfahren nach Anspruch 5, wobei das Empfangen einer RRC-Signalisierung oder eines durch die Netzwerkvorrichtung gesendeten SIBs durch die erste Endgerätevorrichtung umfasst:
Empfangen des durch die Netzwerkvorrichtung periodisch ausgestrahlten SIBs durch die erste Endgerätevorrichtung.

7. Verfahren nach einem der Ansprüche 4 bis 6, wobei die dedizierte Übertragungsressource zum Empfangsressourcensatz gehört.

8. Verfahren nach einem der Ansprüche 1 bis 7, wobei die dedizierte Übertragungsressource für eine Endgerätevorrichtungsgruppe zur Übertragung von Daten verwendet wird, die Endgerätevorrichtungsgruppe mindestens zwei Endgerätevorrichtungen umfasst und die mindestens zwei Endgerätevorrichtungen die erste Endgerätevorrichtung umfassen.

9. Verfahren nach Anspruch 8, wobei keine gleichzeitige Datenübertragung durch mehrere Endgerätevorrichtungen in der Endgerätevorrichtungsgruppe stattfindet und nur eine der Endgerätevorrichtungen in der Endgerätevorrichtungsgruppe zu einem Zeitpunkt Daten unter Verwendung der dedizierten Übertragungsressource senden darf; oder,
wobei mehrere Endgerätevorrichtungen in der Endgerätevorrichtungsgruppe gleichzeitig Daten senden und die mehreren Endgerätevorrichtungen verschiedene dedizierte Übertragungsressourcen verwenden, um gleichzeitig Daten zu senden.

10. Verfahren nach einem der Ansprüche 1 bis 9, wobei die Ressourcenkonfigurationsinformationen einen Identifikator des ersten Endgerätes umfassen.

11. Verfahren nach Anspruch 10, wobei der Identifikator der ersten Endgerätevorrichtung verwendet wird, um eine Quelladresse anzugeben, über die die erste Endgerätevorrichtung Daten an die zweite Endgerätevorrichtung sendet.

12. Ressourcenkonfigurationsverfahren, umfassend:
Konfigurieren, durch eine Netzwerkvorrichtung, einer dedizierten Übertragungsressource für eine erste Endgerätevorrichtung, wobei die dedizierte Übertragungsressource von der ersten Endgerätevorrichtung verwendet wird, um eine Sidelink-Datenübertragung mit einer zweiten Endgerätevorrichtung durchzuführen, wenn sich die erste Endgerätevorrichtung in einem RRC-Inaktivzustand befindet; und
Senden von Ressourcenkonfigurationsinformationen durch die Netzwerkvorrichtung an die erste Endgerätevorrichtung, die sich in einem RRC-Verbindungszustand befindet, wobei die Ressourcenkonfigurationsinformationen dazu verwendet werden, die dedizierte Übertragungsressource anzugeben.

13. Verfahren nach Anspruch 12, wobei das Senden von Ressourcenkonfigurationsinformationen durch die Netzwerkvorrichtung an die erste Endgerätevorrichtung, die sich in einem RRC-Verbindungszustand befindet, umfasst:
Senden einer Radio Resource Control-, RRC-, Nachricht durch die Netzwerkvorrichtung an die erste Endgerätevorrichtung, die sich in dem RRC-Verbindungszustand befindet, wobei die RRC-Nachricht die Ressourcenkonfigurationsinformationen umfasst.

14. Verfahren nach Anspruch 13, wobei die RRC-Nachricht verwendet wird, um anzugeben, dass die erste Endgerätvorrichtung vom RRC-Verbindungszustand in den RRC-Inaktivzustand übergeht.

15. Verfahren nach einem der Ansprüche 12 bis 14, ferner umfassend:
Senden, durch die Netzwerkvorrichtung, von Empfangsressourceninformationen an die erste Endgerätevorrichtung, die sich in dem RRC-Verbindungszustand befindet, wobei die Empfangsressourceninformationen verwendet werden, um einen Empfangsressourcensatz anzugeben, und eine Ressource in dem Empfangsressourcensatz für die erste Endgerätevorrichtung verwendet wird, um Daten von einer dritten Endgerätevorrichtung zu empfangen, wenn sich die erste Endgerätevorrichtung in dem RRC-Inaktivzustand befindet.

16. Verfahren gemäß Anspruch 15, wobei das Senden durch die Netzwerkvorrichtung das von Empfangsressourceninformationen an die erste Endgerätevorrichtung, die sich im RRC-Verbindungszustand befindet, umfasst:
Senden einer RRC-Signalisierung oder eines Systeminformationsblocks, SIB, durch die erste Endgerätevorrichtung an die erste Endgerätevorrichtung, die sich im RRC-Verbindungszustand befindet, wobei die RRC-Signalisierung und der SIB die Empfangsressourceninformationen umfassen.

17. Verfahren nach Anspruch 16, wobei das Senden einer RRC-Signalisierung oder eines SIB durch die erste Endgerätevorrichtung an die erste Endgerätevorrichtung, die sich im RRC-Verbindungszustand befindet, umfasst:
periodisches Ausstrahlen des SIB durch die Netzwerkvorrichtung.

18. Verfahren nach einem der Ansprüche 15 bis 17, wobei das Konfigurieren einer dedizierten Übertragungsressource für eine erste Endgerätevorrichtung durch eine Netzwerkvorrichtung umfasst: Bestimmen der dedizierten Übertragungsressource aus dem Empfangsressourcensatz durch die Netzwerkvorrichtung.

19. Endgerätevorrichtung, die dazu ausgelegt ist, das Verfahren nach einem der Ansprüche 1-11 durchzuführen.

20. Netzwerkvorrichtung, die dazu ausgelegt ist, das Verfahren nach einem der Ansprüche 12-18 durchzuführen.

## Revendications

1. Procédé de configuration de ressources, le procédé étant **caractérisé en ce qu'**il comprend les étapes consistant à :
si un premier dispositif terminal est dans un état connecté RRC, recevoir (S110) une information de configuration de ressource envoyée par un dispositif de réseau, l'information de configuration de ressource étant utilisée pour indiquer une ressource de transmission dédiée ; et
si le premier dispositif terminal est dans un état inactif RRC, réaliser une transmission de données en liaison latérale avec un deuxième dispositif terminal au moyen de la ressource de transmission dédiée qui est configurée par le dispositif de réseau quand le premier dispositif terminal est dans l'état connecté RRC.

2. Procédé selon la revendication 1, dans lequel la réception d'une information de configuration de ressource envoyée par un dispositif de réseau comprend l'étape consistant à :
recevoir, par le premier dispositif terminal, un message de contrôle des ressources radio (RRC) envoyé par le dispositif de réseau, le message RRC comprenant l'information de configuration de ressource.

3. Procédé selon la revendication 2, dans lequel le message RRC est utilisé pour indiquer que le premier dispositif terminal passe de l'état connecté RRC à l'état inactif RRC.

4. Procédé selon l'une quelconque des revendications 1 à 3, comprenant en outre les étapes consistant à :
si le premier dispositif terminal est dans l'état connecté RRC, recevoir, en provenance du dispositif de réseau, une information de ressource de réception, l'information de ressource de réception étant utilisée pour indiquer un ensemble de ressources de réception ; et
si le premier dispositif terminal est dans l'état inactif RRC, recevoir des données envoyées par un troisième dispositif terminal au moyen d'une ressource de l'ensemble de ressources de réception.

5. Procédé selon la revendication 4, dans lequel la réception, en provenance du dispositif de réseau, d'une information de ressource de réception comprend l'étape consistant à :
recevoir, par le premier dispositif terminal, une signalisation RRC ou un bloc d'informations de système (SIB) envoyé par le dispositif de réseau, la signalisation RRC et le SIB comprenant l'information de ressource de réception.

6. Procédé selon la revendication 5, dans lequel la réception, par le premier dispositif terminal, d'une signalisation RRC ou d'un SIB envoyé par le dispositif réseau comprend l'étape consistant à :
recevoir, par le premier dispositif terminal, le SIB diffusé périodiquement par le dispositif de réseau.

7. Procédé selon l'une quelconque des revendications 4 à 6, dans lequel la ressource de transmission dédiée appartient à l'ensemble de ressources de réception.

8. Procédé selon l'une quelconque des revendications 1 à 7, dans lequel la ressource de transmission dédiée est utilisée par un groupe de dispositifs terminaux pour transmettre des données, le groupe de dispositifs terminaux comprenant au moins deux dispositifs terminaux et les au moins deux terminaux comprenant le premier dispositif terminal.

9. Procédé selon la revendication 8, dans lequel il n'y a pas de transmission de données simultanée par une pluralité de dispositifs terminaux dans le groupe de dispositifs terminaux, et un seul des dispositifs terminaux dans le groupe de dispositifs terminaux est autorisé à envoyer des données à la fois au moyen de la ressource de transmission dédiée ; ou
dans lequel une pluralité de dispositifs terminaux dans le groupe de dispositifs terminaux envoient des données simultanément, et la pluralité de dispositifs terminaux utilisent différentes ressources de transmission dédiées pour envoyer simultanément des données.

10. Procédé selon l'une quelconque des revendications 1 à 9, dans lequel l'information de configuration de ressource comprend un identifiant du premier dispositif terminal.

11. Procédé selon la revendication 10, dans lequel l'identifiant du premier dispositif terminal est utilisé pour indiquer une adresse source à l'aide de laquelle le premier dispositif terminal envoie des données au deuxième dispositif terminal.

12. Procédé de configuration de ressource, comprenant les étapes consistant à :
configurer, par un dispositif de réseau, une ressource de transmission dédiée pour un premier dispositif terminal, la ressource de transmission dédiée étant utilisée par le premier dispositif terminal pour réaliser une transmission de données en liaison latérale avec un deuxième dispositif terminal si le premier dispositif terminal est dans un état inactif RRC ; et
envoyer, par le dispositif de réseau, une information de configuration de ressource au premier dispositif terminal qui est dans un état connecté RRC, l'information de configuration de ressource étant utilisée pour indiquer la ressource de transmission dédiée.

13. Procédé selon la revendication 12, dans lequel l'envoi, par le dispositif de réseau, d'une information de configuration de ressource au premier dispositif terminal, qui est dans un état connecté RRC, comprend l'étape consistant à :
envoyer, par le dispositif de réseau, un message de contrôle des ressources radio (RRC) au premier dispositif terminal qui est dans l'état connecté RRC, le message RRC comprenant l'information de configuration de ressource.

14. Procédé selon la revendication 13, dans lequel le message RRC est utilisé pour indiquer que le premier dispositif terminal passe de l'état connecté RRC à l'état inactif RRC.

15. Procédé selon l'une quelconque des revendications 12 à 14, comprenant en outre l'étape consistant à :
envoyer, par le dispositif de réseau, une information de ressource de réception au premier dispositif terminal qui est dans l'état connecté RRC, l'information de ressource de réception étant utilisée pour indiquer un ensemble de ressources de réception, et une ressource dans l'ensemble de ressources de réception étant utilisée par le premier dispositif terminal pour recevoir des données en provenance d'un troisième dispositif terminal si le premier dispositif terminal est dans l'état inactif RRC.

16. Procédé selon la revendication 15, dans lequel l'envoi, par le dispositif de réseau, d'une information de ressource de réception au premier dispositif terminal, qui est dans l'état connecté RRC, comprend l'étape consistant à :
envoyer, par le premier dispositif terminal, une signalisation RRC ou un bloc d'informations de système (SIB) au premier dispositif terminal qui est dans l'état connecté RRC, la signalisation RRC et le SIB comprenant l'information de ressource de réception.

17. Procédé selon la revendication 16, dans lequel l'envoi, par le premier dispositif terminal, d'une signalisation RRC ou d'un SIB au premier dispositif terminal, qui est dans l'état connecté RRC, comprend l'état consistant à :
diffuser périodiquement le SIB par le dispositif de réseau.

18. Procédé selon l'une quelconque des revendications 15 à 17, dans lequel la configuration, par un dispositif de réseau, d'une ressource de transmission dédiée pour un premier dispositif terminal comprend l'étape consistant à :
déterminer, par le dispositif de réseau, la ressource de transmission dédiée de l'ensemble de ressources de réception.

19. Dispositif terminal, configuré pour réaliser le procédé selon l'une quelconque des revendications 1 à 11.

20. Dispositif de réseau, configuré pour réaliser le procédé selon l'une quelconque des revendications 12 à 18.
